(19) Europäisches Patentamt
European Patent Office
Office européen des brevets

(11) EP 4 723 184 A1

(12) EUROPEAN PATENT APPLICATION

(43) Date of publication:
08.04.2026 Bulletin 2026/15

(21) Application number: 24215499.5

(22) Date of filing: 26.11.2024

(51) International Patent Classification (IPC):
H01M 4/13 (2010.01)   H01M 10/0567 (2010.01)

(52) Cooperative Patent Classification (CPC):
H01M 10/0567; H01M 4/13; H01M 10/0525;
H01M 2004/025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.10.2024 US 202418905390

(71) Applicant: II-VI Delaware, Inc.
Wilmington, Delaware 19801 (US)

(72) Inventors:
• Xu, Wen-Qing
19801 Wilmington (US)

• Du Hill, Linze
19801 Wilmington (US)
• Gao, Zan
19801 Wilmington (US)
• Lu, Xinyu
19801 Wilmington (US)
• Masarapu, Charan
19801 Wilmington (US)

(74) Representative: Forresters IP LLP
Skygarden
Erika-Mann-Straße 11
80636 München (DE)

(54) **ELECTROLYTE COMPOSITION**

(57) An electrolyte composition includes: an electrolyte; and an additive composition including: an inhibitor that reduces a topography variation resulting from material deposition on the anode of the battery during the charging process; and/or a leveler that reduces an effect of ion concentration gradient between a plurality of tips of the plurality of branches and the base from material deposition on the anode of the battery during the charging process. This electrolyte composition is for use with a battery including an anode and a cathode during a charging process. The anode includes a base and a plurality of branches protruding from the base and spaced apart from one another along the base to form a gap.

EP 4 723 184 A1

**Description**

BACKGROUND

1. Field

The disclosed subject matter relates generally to an electrolyte composition and a battery comprising the electrolyte composition.

2. Technical Considerations

In battery applications, such as rechargeable battery applications, topographical growth (e.g., branches) on the anode can be formed by material non-uniformly depositing thereon during re-charging. This topographical growth can negatively affect battery performance over time, including shortening the usable life of the battery. For example, topographical growth on the anode can cause internal short circuiting of the battery, which can lead to battery failure.

SUMMARY

Accordingly, it is an object of the presently disclosed subject matter to provide an electrolyte composition and/or a battery that overcomes some or all of the deficiencies identified above.

According to non-limiting embodiments or aspects, provided is an electrolyte composition for use with a battery including an anode and a cathode during a charging process, the anode including a base and a plurality of branches protruding from the base and spaced apart from one another along the base to form a gap, the electrolyte composition including: an electrolyte; and an additive composition including: an inhibitor that reduces a topography variation resulting from material deposition on the anode of the battery during the charging process; and/or a leveler that reduces an effect of ion concentration gradient between a plurality of tips of the plurality of branches and the base from material deposition on the anode of the battery during the charging process.

In some non-limiting embodiments or aspects, the additive composition may further include an accelerator that accelerates material deposition along the base of the anode of the battery during the charging process.

In some non-limiting embodiments or aspects, in the additive composition: the inhibitor may be adapted to selectively arrange proximate the plurality of tips of the plurality of branches; the leveler may be adapted to selectively arrange in the gap along sidewalls of the plurality of branches; and/or the accelerator may be adapted to selectively arrange in the gap proximate the base.

In some non-limiting embodiments or aspects, a solid electrolyte interphase may form on a surface of the base and the plurality of branches and between the base and plurality of branches and the leveler, inhibitor, and/or accelerator.

In some non-limiting embodiments or aspects, the accelerator may include an ionic material, and the leveler and the inhibitor may include a non-ionic material.

In some non-limiting embodiments or aspects, the inhibitor may have a higher molecular weight than the leveler.

In some non-limiting embodiments or aspects, the leveler may include a polarizing agent including at least one hybrid atom including an atom from group IIIA, IVA, VA, VIA, VIIA, or any combination thereof.

In some non-limiting embodiments or aspects, the at least one hybrid atom may include at least one of the following atoms: B, Al, Si, N, P, O, S, Se, F, Cl, Br, I, or any combination thereof.

In some non-limiting embodiments or aspects, the at least one hybrid atom may include at least one of the following atoms: N, P, O, S, or any combination thereof.

In some non-limiting embodiments or aspects, the at least one hybrid atom may include from 4-80 weight percent of the leveler.

In some non-limiting embodiments or aspects, the leveler may include an unsaturated bond.

In some non-limiting embodiments or aspects, the leveler may include an aromatic functional group.

In some non-limiting embodiments or aspects, the leveler may have a molecular weight of less than 500 g/mol.

In some non-limiting embodiments or aspects, the inhibitor may include a polarizing agent including at least one hybrid atom including an atom from group IIIA, IVA, VA, VIA, VIIA, or any combination thereof.

In some non-limiting embodiments or aspects, the at least one hybrid atom may include at least one of the following atoms: B, Al, Si, N, P, O, S, Se, F, Cl, Br, I, or any combination thereof.

In some non-limiting embodiments or aspects, the at least one hybrid atom may include at least one of the following atoms: N, P, O, S, or any combination thereof.

In some non-limiting embodiments or aspects, the inhibitor may include at least one functional group including at least one of a hydroxyl group, an ether group, an ester group, a thiol group, a thiol ester group, a thiol ether group, an epoxy group, or any combination thereof.

In some non-limiting embodiments or aspects, the at least one hybrid atom may include at least 3 weight percent of the inhibitor.

In some non-limiting embodiments or aspects, the inhibitor may include a polyglycol, a polyglycol ether, and/or a polyglycol ester.

In some non-limiting embodiments or aspects, the inhibitor may have a molecular weight of at least 200 g/mol.

In some non-limiting embodiments or aspects, the at least one functional group may have a plurality of functional groups.

In some non-limiting embodiments or aspects, the accelerator may have an anionic compound.

In some non-limiting embodiments or aspects, the electrolyte may include an inactive solvent.

In some non-limiting embodiments or aspects, the inactive solvent may include a fluorinated ether.

In some non-limiting embodiments or aspects, the fluorinated ether may include at least one of the following: 1,1,2,2-Tetrafluoroethyl-2,2,3,3-tetrafluoropropyl ether (TTE), a fluorinated ether of bis(2,2,2-trifluoroethyl) ether (BTFE), and/or any combination thereof.

In some non-limiting embodiments or aspects, the electrolyte may include a lithium ion complex.

In some non-limiting embodiments or aspects, the lithium ion complex may include a lithium ion and a ligand.

In some non-limiting embodiments or aspects, the ligand may include a mono or poly glycol ether.

In some non-limiting embodiments or aspects, the anode may include an alkaline metal, alkali earth metal, or group IIIA metal anode, and the alkaline metal, alkali earth metal, or group IIIA metal may be deposited on the anode during the charging process.

According to non-limiting embodiments or aspects, provided is a battery including: an anode; a cathode; and an electrolyte composition in contact with the anode and the cathode, the electrolyte composition as described herein.

In some non-limiting embodiments or aspects, the anode may include a base and a plurality of branches protruding from the base and spaced apart from one another along the base to form a gap, where in the additive composition: the leveler may be adapted to selectively arrange in the gap along sidewalls of the plurality of branches; and/or the inhibitor may be adapted to selectively arrange proximate the plurality of tips of the plurality of branches.

In some non-limiting embodiments or aspects, a solid electrolyte interphase may form on a surface of the base and the plurality of branches and between the base and plurality of branches and the leveler, inhibitor, and an accelerator adapted to selectively arrange in the gap proximate the base.

In some non-limiting embodiments or aspects, the cathode may include a chalcogen.

According to non-limiting embodiments or aspects, provided is a method for producing a rechargeable battery that includes arranging the electrolyte composition as described herein in contact with the anode and the cathode to form a rechargeable battery.

According to non-limiting embodiments or aspects, provided is a method for extending the life of a rechargeable battery that includes: discharging a rechargeable battery comprising an anode, a cathode, and an electrolyte composition in contact with the anode and the cathode, the electrolyte composition as described herein; and re-charging the rechargeable battery.

In some non-limiting embodiments or aspects, the life of the rechargeable battery may be extended by the electrolyte composition reducing a topography variation resulting from material deposition on the anode of a battery during the re-charging and/or reducing an effect of ion concentration gradient between a plurality of tips of the plurality of branches and the base from material deposition on the anode of the battery during the re-charging.

According to non-limiting embodiments or aspects, provided is a use of the electrolyte composition as described herein to extend the life of a rechargeable battery.

According to non-limiting embodiments or aspects, provided is a use of the electrolyte composition as described herein as an electrolyte in a rechargeable battery.

Further embodiments or aspects are set forth in the following numbered clauses:

Clause 1: An electrolyte composition for use with a battery comprising an anode and a cathode during a charging process, the anode comprising a base and a plurality of branches protruding from the base and spaced apart from one another along the base to form a gap, the electrolyte composition comprising: an electrolyte; and an additive composition comprising: an inhibitor that reduces a topography variation resulting from material deposition on the anode of the battery during the charging process; and/or a leveler that reduces an effect of ion concentration gradient between a plurality of tips of the plurality of branches and the base from material deposition on the anode of the battery during the charging process.

Clause 2: The electrolyte composition of clause 1, wherein the additive composition further comprises an accelerator that accelerates material deposition along the base of the anode of the battery during the charging process.

Clause 3: The electrolyte composition of clause 2, wherein in the additive composition: the inhibitor is adapted to selectively arrange proximate the plurality of tips of the plurality of branches; the leveler is adapted to selectively arrange in the gap along sidewalls of the plurality of branches; and/or the accelerator is adapted to selectively arrange in the gap proximate the base.

Clause 4: The electrolyte composition of clause 3, wherein a solid electrolyte interphase forms on a surface of the base and the plurality of branches and between the base and plurality of branches and the leveler, inhibitor, and/or accelerator.

Clause 5: The electrolyte composition of any of clauses 2-4, wherein the accelerator comprises an ionic material, and the leveler and the inhibitor comprise a non-ionic material.

Clause 6: The electrolyte composition of any of clauses 1-5, wherein the inhibitor has a higher molecular weight than the leveler.

Clause 7: The electrolyte composition of any of clauses 1-6, wherein the leveler comprises a polarizing agent comprising at least one hybrid atom comprising an atom from group IIIA, IVA, VA, VIA, VIIA, or any combination thereof.

Clause 8: The electrolyte composition of clause 7, wherein the at least one hybrid atom comprises at least one of the following atoms: B, Al, Si, N, P, O, S, Se, F, Cl, Br, I, or any combination thereof.

Clause 9: The electrolyte composition of clause 8, wherein the at least one hybrid atom comprises at least one of the following atoms: N, P, O, S, or any combination thereof.

Clause 10: The electrolyte composition of clause 8 or 9, wherein the at least one hybrid atom comprises from 4-80 weight percent of the leveler.

Clause 11: The electrolyte composition of any of clauses 1-10, wherein the leveler comprises an unsaturated bond.

Clause 12: The electrolyte composition of any of clauses 1-11, wherein the leveler comprises an aromatic functional group.

Clause 13: The electrolyte composition of any of clauses 1-12, wherein the leveler has a molecular weight of less than 500 g/mol.

Clause 14: The electrolyte composition of any of clauses 1-13, wherein the inhibitor comprises a polarizing agent comprising at least one hybrid atom comprising an atom from group IIIA, IVA, VA, VIA, VIIA, or any combination thereof.

Clause 15: The electrolyte composition of clause 14, wherein the at least one hybrid atom comprises at least one of the following atoms: B, Al, Si, N, P, O, S, Se, F, Cl, Br, I, or any combination thereof.

Clause 16: The electrolyte composition of clause 15, wherein the at least one hybrid atom comprises at least one of the following atoms: N, P, O, S, or any combination thereof.

Clause 17: The electrolyte composition of any of clauses 14-16, the inhibitor comprises at least one functional group comprising at least one of a hydroxyl group, an ether group, an ester group, a thiol group, a thiol ester group, a thiol ether group, an epoxy group, or any combination thereof.

Clause 18: The electrolyte composition of any of clauses 14-17, wherein the at least one hybrid atom comprises at least 3 weight percent of the inhibitor.

Clause 19: The electrolyte composition of any of clauses 1-18, wherein the inhibitor comprises a polyglycol, a polyglycol ether, and/or a polyglycol ester.

Clause 20: The electrolyte composition of any of clauses 1-19, wherein the inhibitor has a molecular weight of at least 200 g/mol.

Clause 21: The electrolyte composition of any of clauses 14-20, wherein the at least one functional group comprises a plurality of functional groups.

Clause 22: The electrolyte composition of any of clauses 2-21, wherein the accelerator comprises an anionic compound.

Clause 23: The electrolyte composition of any of clauses 1-22, wherein the electrolyte comprises an inactive solvent.

Clause 24: The electrolyte composition of clause 23, wherein the inactive solvent comprises a fluorinated ether.

Clause 25: The electrolyte composition of clause 24, wherein the fluorinated ether comprises at least one of the following: 1,1,2,2-Tetrafluoroethyl-2,2,3,3-tetrafluoropropyl ether (TTE), a fluorinated ether of bis(2,2,2-trifluoroethyl) ether (BTFE), and/or any combination thereof.

Clause 26: The electrolyte composition of any of clauses 1-25, wherein the electrolyte comprises a lithium ion complex.

Clause 27: The electrolyte composition of clause 26, wherein the lithium ion complex comprises a lithium ion and a ligand.

Clause 28: The electrolyte composition of clause 27, wherein the ligand comprises a mono or poly glycol ether.

Clause 29: The electrolyte composition of any of clauses 1-28, wherein the anode comprises an alkaline metal, alkali earth metal, or group IIIA metal anode, and the alkaline metal, alkali earth metal, or group IIIA metal is deposited on the anode during the charging process.

Clause 30: A battery comprising: an anode; a cathode; and an electrolyte composition in contact with the anode and the cathode, the electrolyte composition of any of clauses 1-29.

Clause 31: The battery of clause 30, wherein the anode comprises a base and a plurality of branches protruding from the base and spaced apart from one another along the base to form a gap, wherein in the additive composition: the leveler is adapted to selectively arrange in the gap along sidewalls of the plurality of branches; and/or the inhibitor is adapted to selectively arrange proximate the plurality of tips of the plurality of branches.

Clause 32: The battery of clause 30 or 31, wherein a solid electrolyte interphase forms on a surface of the base and the plurality of branches and between the base and plurality of branches and the leveler, inhibitor, and an accelerator adapted to selectively arrange in the gap proximate the base.

Clause 33: The battery of any of clauses 30-32, wherein the cathode comprises a chalcogen.

Clause 34: A method for producing a rechargeable battery comprising: arranging the electrolyte composition of any of clauses 1-29 in contact with the anode and the cathode to form a rechargeable battery.

Clause 35: A method for extending the life of a rechargeable battery comprising: discharging a rechargeable battery comprising an anode, a cathode, and an electrolyte composition in contact with the anode and the cathode, the electrolyte composition of any of clauses 1-29; and re-charging the rechargeable battery.

Clause 36: The method of clause 35, wherein the life of the rechargeable battery is extended by the electrolyte composition reducing a topography variation resulting from material deposition on the anode of a battery during the re-charging and/or reducing an effect of ion concentration gradient between a plurality of tips of the plurality of branches and the base from material deposition on the anode of the battery during the re-charging.

Clause 37: Use of the electrolyte composition of any of clauses 1-29 to extend the life of a rechargeable battery.

Clause 38: Use of the electrolyte composition of any of clauses 1-29 as an electrolyte in a rechargeable battery.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter. As used in the specification and the claims, the singular forms of "a," "an," and "the" include plural referents unless the context clearly dictates otherwise.

## BRIEF DESCRIPTION OF THE DRAWINGS

Additional advantages and details of the disclosed subject matter are explained in greater detail below with reference to the exemplary embodiments or aspects that are illustrated in the accompanying figures, in which:

FIG. 1 shows a schematic view of a battery according to some non-limiting embodiments or aspects of the presently disclosed subject matter; and

FIG. 2 shows a schematic view of an anode of a battery on which branches (not to scale) are forming and with which an electrolyte composition is used according to some non-limiting embodiments or aspects of the presently disclosed subject matter.

## DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms.

As used herein, the transitional term "comprising" (and other comparable terms, e.g., "containing" and "including") is "open-ended" and open to the inclusion of unspecified matter. Although described in terms of "comprising", the terms "consisting essentially of" and "consisting of" are also within the scope of the disclosure.

Non-limiting embodiments or aspects of the disclosed subject matter are directed to an electrolyte composition for use with a battery comprising an anode and a cathode during a charging process, the anode comprising a base and a plurality of branches protruding from the base and spaced apart from one another along the base to form a gap, the electrolyte composition comprising: an electrolyte; and an additive composition comprising: an inhibitor that reduces a topography variation resulting from material deposition on the anode of the battery during the charging process; and/or a leveler that reduces an effect of ion concentration gradient between a plurality of tips of the plurality of branches and the base from material deposition on the anode of the battery during the charging process.

Non-limiting embodiments or aspects of the disclosed subject matter are also directed to a battery comprising: an anode; a cathode; and an electrolyte composition in contact with the anode and the cathode, the electrolyte composition as described herein.

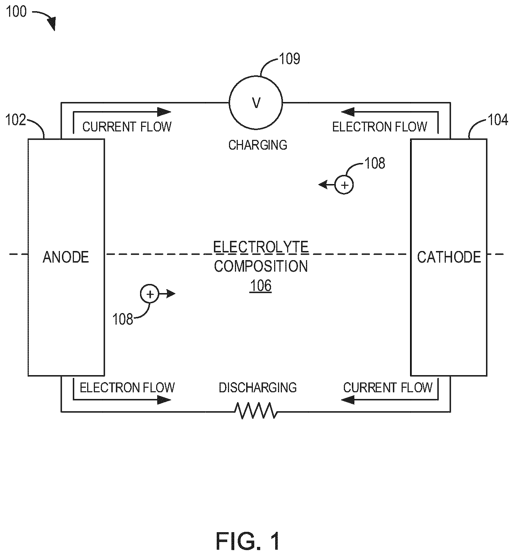

Referring to FIG. 1, a battery 100 is shown according to non-limiting embodiments or aspects. The battery 100 in FIG. 1 may comprise a secondary (rechargeable) battery that undergoes a series of discharging (see FIG. 1, below dotted line) and re-charging (see FIG. 1, above dotted line) steps.

The battery 100 may comprise an anode 102 spaced apart from a cathode 104. An electrolyte composition 106 as described herein may be in fluid communication with the anode 102 and the cathode 104.

In the discharging process, the electron flow may be from the anode 102 to the cathode 104, and the current flow may be from the cathode 104 to the anode 102. An ion material 108 (also referred to herein as a plating material 108) may flow through the electrolyte composition 106 from the anode 102 to the cathode 104. In some non-limiting examples, the ion material 108 may comprise lithium ions.

In the re-charging process, the electron flow may be from the cathode 104 to the anode 102, and the current flow may be from the anode 102 to the cathode 104. The ion material 108 may flow through the electrolyte composition 106 from the cathode 104 to the anode 102. At least a portion of the ion material 108 may plate on the anode 102.

The battery 100 may comprise a separator (not shown) between the anode 102 and the cathode 104, which may be configured to allow for ion transport (e.g., the ion material 108) therethrough during charging and/or discharging of the battery 100. The battery 100 may comprise a charger 109 configured to re-charge the battery 100 after at least partial discharge thereof.

With continued reference to FIG. 1, in some non-limiting embodiments or aspects, the cathode 104 may comprise at least one of: at least one material including a chalcogen element (e.g., S, Se, O, and Te), fluoride, at least one intercalated cathode material (e.g., $LiCoO_2$, $LiMnO_2$, $LiNiO_2$, $LiCo_xNi_yMn_{1-x-y}O_2$), and $LiFePO_4$ that may include various dopants such as Ni, Mg, Al, Cr, Zn, Ti, Fe, Co, Ni, Cu, Nd, and La, at least one supercapacitor material (e.g., metal oxides/hydroxides), conductive polymers, or some combination thereof. The cathode 104 may comprise a chalcogen. The cathode 104 may comprise sulfur.

In some non-limiting embodiments or aspects, the cathode 104 may comprise a substrate coated with a coating comprising a carbon-chalcogen composite. The coating may further comprise a binder and conductive carbon. The binder may comprise a polymeric material. Non-limiting examples of suitable polymeric materials include carboxy methyl cellulose (CMC), polyvinylidene fluoride (PVDF), polytetrafluoroethylene (PTFE), styrene-butadiene rubber (SBR), polyethylene glycol dimethyl ether (PEGDME), conductive polymer(s) (such as poly(3,4-ethylenedioxythiophene) (PEDOT)), polyacrylic acid (PAA), polyethylenimine (PE!), a latex polymer, an acrylate, a polyurethane, a polyurethane acrylate, and the like.

With continued reference to FIG. 1, in some non-limiting embodiments or aspects, the anode 102 may comprise at least one of: at least one element from group IVA (e.g., C, Si, Sn), at least one element from group IIIA (e.g., Al), at least one transition metal from group IB-VIIIB (e.g., Zn, Cd, Ag), at least one alkaline earth metal from group IIA (e.g., Mg, Ca), at least one alkali metal from group IA (e.g., Li, Na, K), at least one compound (e.g., $Li_xSi_y$, $Li_xGe_y$, LiAl, $Li_xSn_y$, LTO, NiO, $SiO_x$), or some combination thereof. The anode 102 may comprise at least one of an alkali metal from group IA, an alkaline earth metal from group IIA, an element from group IIIA, and/or some combination thereof. The anode 102 may comprise lithium and/or sodium, such as lithium.

In some non-limiting embodiments or aspects, the battery 100 may comprise the cathode 104 comprising a chalcogen and the anode 102 comprising lithium, such as a sulfur cathode 104 and a lithium anode 102 (e.g., a lithium-chalcogen and/or lithium-sulfur battery).

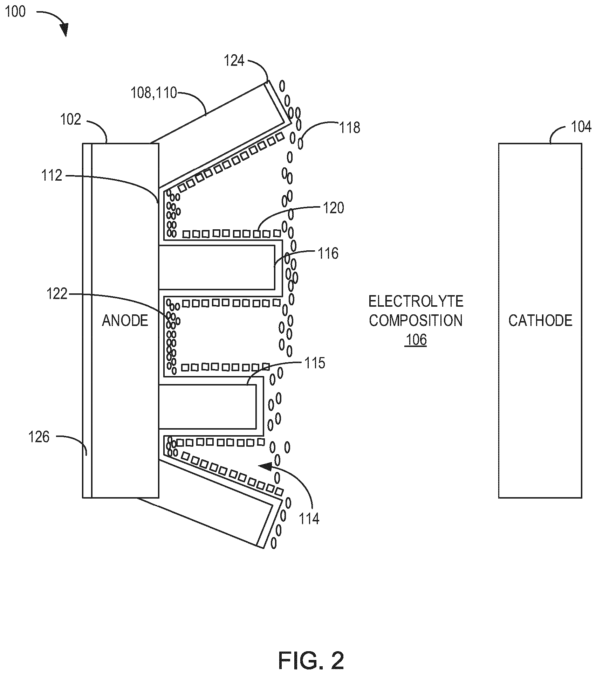

Referring to FIG. 2, an anode 102 of a battery 100 is shown. Branches 110 may be formed on the anode 102, and an electrolyte composition 106 as described herein may be used to control formation and/or growth of the branches 110. Thus, the anode 102 having the branches 110 may comprise a varying topography having branches 110 protruding from the surface of the anode 102, forming peaks (e.g., tips) and valleys (e.g. bases). The branches 110 may have gaps in between. In some non-limiting examples, the branches 110 may comprise a dendritic branch structure or form any other varied topography. The varied topography may be formed by material plating (e.g., back) on the anode 102 in a non-uniform manner.

A plurality of branches 110 may form on the anode 102. The branches 110 may be formed by the ion material 108 plating on the anode 102 and/or on the branches 110 formed on the anode 102 during the charging process. The branches 110 may grow in the direction of the cathode 104.

The plurality of branches 110 may protrude from a base 112 of the anode 102 and be spaced apart from one another along the base 112 to form a gap 114 therebetween. Each branch 110 may comprise a tip 116 corresponding to a distal end of the branch 110 (the proximal end of which terminates at the base 112). The tip 116 of the branch 110 may be a region of the branch 110 farthest from the anode 102. Each branch 110 may comprise one or more sidewalls 115 spanning from the tip 116 of the branch 110 to the base 112.

The branches 110 may be undesirable in the battery 100 and may negatively affect battery performance over time, including shortening the usable life of the battery 100. For example, uncontrolled growth of the branches 110 can cause internal short circuiting of the battery 100, such as by the branches 110 touching the cathode 104. The internal short circuiting can lead to battery 100 failure.

The electrolyte composition 106 of the present disclosure may inhibit (e.g., prevent and/or slow) branch 110 growth, thus extending the usable life of the battery 100.

With continued reference to FIG. 2, the electrolyte composition 106 may comprise an electrolyte. The electrolyte may be a liquid, solid, or gel material. The electrolyte may be positioned between the cathode 104 and the anode 102 (the electrodes). The electrolyte may wet or soak the electrodes.

In some non-limiting embodiments or aspects, the electrolyte may comprise an inactive solvent. For example, non-limiting embodiments may include dispersing the coordinated Li ion complex in the inactive solvent. Embodiments of the coordinated lithium-ion complex in the inactive solvent maintains the 2e$^-$ Li-S battery electro-chemical pathways with high capacity and a good low temperature performance, while achieving high Li$^+$ ionic conductivity. Inactive solvents further overcome wetting issues due to a substantial reduction in viscosity. In accordance with embodiments, Raman spectroscopy may be used to verify that the associated coordination number (ACN) of lithium-ion complexes is maintained in the inactive solvent. The ACN is associated with the coordination chemistry that forms the complex with the Li ion. An inactive solvent will not impact the Raman shift of an anion since it does not participate in a primary coordination sphere of the anion, whereas an active solvent can interact with an anion, which can shift the Raman to a lower wavenumber.

The inactive solvent may comprise a fluorinated chemical such as a fluorinated ether, a fluorinated carbonate, a fluorinated ester, a fluorinated sulfone, a fluorinated sultone, etc. Non-limiting examples of such an inactive solvent include, 1,1,2,2-tetrafluoroethyl 2,2,3,3-tetrafluoropropyl ether (TTE); 2,2,3,3,3-pentafluoropropyl 1,1,2,2-tetrafluoroethyl ether (TPE); fluorobenzene; di-fluorobenzene; 1,1,2,2-tetrafluoroethyl-2,2,2-trifluoroethyl ether (HFE-347); bis(2,2,2-trifluoroethyl) ether (BTFE); methoxyperfluorobutane; methyl 2,2,3,3-tetrafluoro-3-(methoxy)propionate; methyl perfluoro-2,5-dimethyl-3,6-dioxaheptanoate; methyl undecafluoro-2-methyl-3-oxahexanoate; 1,2-bis(1,1,2,2-tetrafluoroethoxy)ethane (TFEE); methyl 3,3,3-trifluoropionate (MTFP); and methyl (2,2,2-trifluoroethyl) carbonate (TFEMC).

The inactive solvent may comprise a fluorinated ether. The fluorinated ether may comprise at least one of the following: 1,1,2,2-Tetrafluoroethyl-2,2,3,3-tetrafluoropropyl ether (TTE), a fluorinated ether of bis(2,2,2-trifluoroethyl) ether (BTFE), and/or any combination thereof.

In some non-limiting embodiments or aspects, the electrolyte composition may comprise an active solvent. The active solvent may comprise an ether, a carbonate, an ester, a sulfone, and/or any combination thereof. For example, the active solvent may comprise 1,2-dimethoxyethane (DME).

In some non-limiting embodiments or aspects, the electrolyte may comprise a lithium ion complex. The lithium ion complex may comprise a lithium ion and a ligand. The ligand may comprise a mono or poly glycol ether. For example, the ligand may comprise polyethylene glycol dimethyl ether (PEGDME).

In some non-limiting embodiments or aspects, the electrolyte may comprise at least one salt, such as lithium tetrafluoroborate (LiBF$_4$), LiC$_2$F$_6$NO$_4$S$_2$ (LiTFSI), LiNS$_2$O$_4$F$_2$ (LiFSI), lithium bis(oxalate)borate (LiBOB), lithium difluorophosphate (LiPO$_2$F$_2$), lithium hexafluorophosphate (LiPF$_6$), or some combination thereof, dissolved in a solvent, such as an ester, an ether, a carbonate, or some combination thereof. The salt of the electrolyte may comprise a halogenated derivative, such as halogenated phosphates, borates, imides, carboxylates, aluminates, chlorates, perfluoroalkylacetates, methides, or some combination thereof. The electrolyte may be an electrolyte used in coin cell batteries, such as disclosed in U.S. Patent No. 11,114,696 which is incorporated herein by reference in its entirety. The electrolyte may comprise an alkali metal, such as lithium and/or sodium.

Any combination of the foregoing electrolytes may be used.

With continued reference to FIG. 2, the electrolyte composition 106 may further comprise an additive composition. The additive composition may comprise an inhibitor 118 and/or a leveler 120. The additive composition may comprise an accelerator 122. The additive composition may comprise, consist of, or consist essentially of the inhibitor 118, the leveler 120, the accelerator 122, and/or any combination thereof. The additive composition may comprise, consist of, or consist essentially of the inhibitor 118, the leveler 120, and the accelerator 122.

The inhibitor 118 of the additive composition may reduce (compared to the electrolyte composition 106 without the inhibitor 118) a topography variation resulting from material deposition on the anode 102 of the battery 100 during the charging (e.g., re-charging) process. The inhibitor 118 may inhibit (e.g., prevent and/or slow) growth of the branches 110 at the tips 116, such as by inhibiting deposition of the ion material 108 at the tips 116 of the branches 110. The topography variation may be reduced by causing the ion material 108 to deposit more quickly proximate the bases 112 (e.g., in the gaps 114) and causing the ion material 108 to deposit more slowly at the tips 116. Thus, the inhibitor 118 may facilitate a more uniform deposition of the ion material 108 at the anode 102.

With continued reference to FIG. 2, the inhibitor 118 may be adapted to selectively arrange proximate the plurality of tips 116 of the plurality of branches 110. By "selectively arranged", it should be understood that the inhibitor 118 may be arranged proximate the plurality of tips 116 in a higher concentration (compared to other components of the additive composition, such as compared to the leveler 120 and the accelerator 122), while it is also to be understood that the inhibitor 118 may still also be arranged proximate other regions of the branches 110, such as along the sidewalls 115 and/or proximate the bases 112.

In some non-limiting embodiments or aspects, the inhibitor 118 may comprise a polarizing agent comprising at least one hybrid atom comprising an atom from group IIIA (B, Al, Ga, In, Tl), IVA (C, Si, Ge, Sn, Pb), VA (N, P, As, Sb, Bi), VIA (O, S, Se, Te), VIIA (F, Cl, Br, I), or any combination thereof. The at least one hybrid atom may comprise at least one of the following atoms: B, Al, Si, N, P, O, S, Se, F, Cl, Br, I, or any combination thereof. The at least one hybrid atom may comprise at least one of the following atoms: N, P, O, S, or any combination thereof.

The at least one hybrid atom may comprise at least 3 weight percent of the inhibitor 118, based on the molecular weight of the inhibitor 118, such as at least 5 weight percent, at least 10 weight percent, at least 15 weight percent, at least 20 weight percent, at least 25 weight percent, or at least 30 weight percent. The at least one hybrid atom may comprise up to 85 weight percent of the inhibitor 118, based on the molecular weight of the inhibitor 118, such as up to 80 weight percent, up to 75 weight percent, up to 70 weight percent, up to 60 weight percent, up to 50 weight percent, or up to 40 weight percent. The at least one hybrid atom may comprise from 3 to 85 weight percent of the inhibitor 118, based on the molecular weight of the inhibitor 118, such as from 10 to 75 weight percent, from 15 to 60 weight percent, from 20 to 50 weight percent, or from 25 to 40 weight percent.

In some non-limiting embodiments or aspects, the inhibitor 118 may comprise at least one functional group comprising at least one of a hydroxyl group, an ether group, an ester group, a thiol group, a thiol ester group, a thiol ether group, an epoxy group, or any combination thereof. For example, the functional group may comprise at least one hydroxyl group. In some non-limiting embodiment or aspect, the hybrid atom may be a part of the at least one functional group. In some non-limiting embodiment or aspect, the hybrid atom may be separate from the at least one functional group.

The inhibitor 118 may comprise a plurality of functional groups, such as at least 2, at least 3, or at least 4 functional groups. The inhibitor 118 may comprise from 2-6 functional groups, such as from 2-4 functional groups.

In some non-limiting embodiments or aspects, the inhibitor 118 may comprise a polyglycol, a polyglycol ether, a polyglycol ester, and/or any combination thereof.

In some non-limiting embodiments or aspects, the inhibitor 118 may have a molecular weight of at least 200 g/mol, such as at least 400 g/mol, at least 1,000 g/mol, or at least 2,000 g/mol. The inhibitor 118 may have a molecular weight of up to 20,000 g/mol, such as up to 15,000 g/mol, up to 10,000 g/mol, or up to 5,000 g/mol. The inhibitor 118 may have a molecular weight of from 200 to 20,000 g/mol, such as from 400 to 10,000 g/mol, or from 1,000 to 5,000 g/mol.

The inhibitor 118 may have a higher molecular weight than the leveler 120.

The inhibitor 118 may comprise a non-ionic material.

The inhibitor 118 may comprise from 1-30,000 ppm by weight of the electrolyte composition, based on total weight of the electrolyte composition, such as from 5-25,000 ppm or from 10-20,000 ppm.

Non-limiting examples of inhibitors 118 suitable for use in the present disclosure include:

| Inhibitor | Molecular Weight (g/mol) | Polyethylene glycol (PEG) Wt% | Hybrid Atom Wt% |
|---|---|---|---|
| Polyethylene glycol 2000 | 2,000 | 100 | 36.8 |
| PLURONIC F-108[1] | 14,600 | 83 | 34.9 |
| PLURONIC L-64[1] | 2,900 | 40 | 31.5 |
| PLURONIC L-31[1] | 1,100 | 10 | 29.5 |
| PLURONIC 123[1] | 5,800 | 30 | 30.4 |
| Polyethylene glycol 4000 | 4,000 | 100 | 36.6 |
| PLURONIC L-35 (PL35)[1] | 1,900 | 50 | 32.6 |
| PLURONIC L-121[1] | 4,400 | 30 | 30.5 |
| PLURONIC 31R1[1] | 3,300 | 10 | 28.8 |

(continued)

| Inhibitor | Molecular Weight (g/mol) | Polyethylene glycol (PEG) Wt% | Hybrid Atom Wt% |
|---|---|---|---|
| Poly(tetrahydrofuran)-250 | 250 | - | 27.0 |
| Glycerol propoxylate-266 | 266 | - | 36.0 |
| Glycerol ethoxylate-1000 | 1,000 | - | 16.0 |
| Pentaerythritol propoxylate (5/4 PO/OH) 426 | 426 | - | 33.8 |
| [1] Product of BASF (Ludwigshafen, Germany) | | | |

With continued reference to FIG. 2, the leveler 120 of the additive composition may reduce (compared to the electrolyte composition 106 without the leveler 120) an effect of ion concentration gradient (e.g., of the ion material 108) between the plurality of tips 116 of the plurality of branches 110 and the base 110 from material deposition on the anode 102 of the battery 100 during the charging process.

At certain points during the discharging process, the electrolyte composition 106 of the battery 100 may have a concentration of the ion material 108 such that there is a higher concentration of the ion material 108 proximate the cathode 104, which concentration gets progressively lower toward the anode 102. There may be a concentration gradient having a higher concentration of the ion material 108 proximate the tips 116 compared to proximate the bases 112. Such concentration gradient fosters growth of the branches 110 at the tips 116 faster than at the bases 112. The leveler 120 may reduce the effect of this ion concentration gradient to eliminate and/or reduce this disparity in plating rate at the tips 116 compared to the bases 112, so as to more uniformly deposit the ion material 108 on the anode 102 during the charging process.

With continued reference to FIG. 2, the leveler 120 may be adapted to selectively arrange in the gap 114 along sidewalls 115 of the plurality of branches 110. By "selectively arranged", it should be understood that the leveler 120 may be arranged proximate to and/or along the sidewalls 115 in a higher concentration (compared to other components of the additive composition, such as compared to the inhibitor 118 and the accelerator 122), while it is also to be understood that the leveler 120 may still also be arranged proximate other regions of the branches 110, such as proximate the tips 116 and/or proximate the bases 112.

In some non-limiting embodiments or aspects, the leveler 120 may comprise a polarizing agent comprising at least one hybrid atom comprising an atom from group IIIA (B, Al, Ga, In, Tl), IVA (C, Si, Ge, Sn, Pb), VA (N, P, As, Sb, Bi), VIA (O, S, Se, Te), VIIA (F, Cl, Br, I), or any combination thereof. The at least one hybrid atom may comprise at least one of the following atoms: B, Al, Si, N, P, O, S, Se, F, Cl, Br, I, or any combination thereof. The at least one hybrid atom may comprise at least one of the following atoms: N, P, O, S, or any combination thereof.

The at least one hybrid atom may comprise at least 4 weight percent of the leveler 120, based on the molecular weight of the leveler 120, such as at least 10 weight percent, at least 15 weight percent, at least 20 weight percent, at least 25 weight percent, at least 30 weight percent, or at least 35 weight percent. The at least one hybrid atom may comprise up to 80 weight percent of the leveler 120, based on the molecular weight of the leveler 120, such as up to 75 weight percent, up to 70 weight percent, up to 60 weight percent, or up to 50 weight percent. The at least one hybrid atom may comprise from 4 to 80 weight percent of the leveler, based on the molecular weight of the leveler 120, such as from 10 to 60 weight percent, from 20 to 50 weight percent, from 25 to 40 weight percent, or from 30 to 40 weight percent.

In some non-limiting embodiments or aspects, the leveler 120 may comprise at least one unsaturated bond. The leveler 120 may comprise a double bond, a triple bond, or any combination thereof.

In some non-limiting embodiments or aspects, the leveler 120 may comprise an aromatic functional group. The aromatic functional group may comprise a benzene ring.

In some non-limiting embodiments or aspects, the leveler 120 may have a molecular weight of at least 50 g/mol, such as at least 75 g/mol, or at least 100 g/mol. The leveler 120 may have a molecular weight of less than 500 g/mol, such as less than 400 g/mol, less than 300 g/mol, or less than 200 g/mol. The leveler 120 may have a molecular weight of from 50 to 500 g/mol, such as from 75 to 300 g/mol, or from 100 to 250 g/mol.

The leveler 120 may have a lower molecular weight than the inhibitor 118.

The leveler 120 may comprise a non-ionic material.

The leveler 120 may comprise from 1-30,000 ppm by weight of the electrolyte composition, based on total weight of the electrolyte composition, such as from 5-20,000 ppm or from 10-10,000 ppm.

Non-limiting examples of levelers 120 suitable for use in the present disclosure include:

| Leveler | Molecular Weight (g/mol) | N Wt% | S Wt% | O Wt% | Hybrid Atom (N,S,O) Wt% |
|---|---|---|---|---|---|
| 2-mercaptobenzimidazole | 150.20 | 18.64 | 21.30 | 0.00 | 39.94 |
| benzimidazole | 118.14 | 23.70 | 0.00 | 0.00 | 23.70 |
| benzoxazole | 119.12 | 11.75 | 0.00 | 13.43 | 25.18 |
| 2-imidazolidinehione | 86.09 | 32.52 | 0.00 | 18.59 | 51.11 |
| benzotriazole (BTA) | 119.12 | 35.26 | 0.00 | 0.00 | 35.26 |
| 1,3-benzodioxole | 122.12 | 0.00 | 0.00 | 26.20 | 26.20 |
| 1,3 benzodioxole-2-one | 136.11 | 0.00 | 0.00 | 35.27 | 35.27 |
| benzo[d][1,3]dioxole-2-one | 136.11 | 0.00 | 0.00 | 35.27 | 35.27 |
| benzofurazan | 120.11 | 23.31 | 0.00 | 13.32 | 36.63 |
| hydroxybenzimidazole | 134.14 | 20.87 | 0.00 | 11.93 | 32.80 |
| hydroxybenzothiazole | 151.19 | 9.26 | 21.17 | 10.58 | 41.01 |
| 2,1,3 benzothiadiazole | 136.17 | 20.56 | 23.50 | 0.00 | 44.06 |
| mercaptobenzothiazole | 167.25 | 8.37 | 38.27 | 0.00 | 46.64 |
| diphenylguanidine | 211.30 | 19.88 | 0.00 | 0.00 | 19.88 |
| thiram | 204.40 | 13.70 | 62.62 | 0.00 | 76.32 |

The accelerator 122 of the additive composition may accelerate (compared to the electrolyte composition without the accelerator 122) material deposition (e.g. of the ion material 108) along the bases 112 of the anode 102 of the battery 100 during the charging process. Accelerating deposition of the ion material 108 proximate the base 112 may result in more uniform deposition of the ion material 108 on the anode 102. The combination of slowing growth of the branches 110 at the tips 116 by the inhibitor 118 and accelerating growth of the branches 110 at the bases 112 may result in less topographical variation thereof.

With continued reference to FIG. 2, the accelerator 122 may be adapted to selectively arrange in the gap 114 proximate the base 112. By "selectively arranged", it should be understood that the accelerator 122 may be arranged proximate the bases 112 in a higher concentration (compared to other components of the additive composition, such as compared to the inhibitor 118 and the leveler 120), while it is also to be understood that the accelerator 122 may still also be arranged proximate other regions of the branches 110, such as along the sidewalls 115 and/or proximate the tips 116.

The accelerator 122 may comprise an ionic material. The accelerator 122 may comprise an anionic compound. The anionic compound may comprise a sulfonate-containing compound.

In some non-limiting embodiments or aspects, the accelerator 122 may have a molecular weight of at least 60 g/mol, such as at least 80 g/mol, or at least 100 g/mol. The accelerator 122 may have a molecular weight of less than 100,000 g/mol, such as less than 50,000 g/mol, or less than 10,000 g/mol. The accelerator 122 may have a molecular weight of from 60 to 100,000 g/mol, such as from 80 to 50,000 g/mol, or from 100 to 10,000 g/mol. The accelerator 122 may comprise a non-polymeric or polymeric compound having a molecular weight of from 100 to 500 g/mol, such as from 150-500 g/mol.

The accelerator 122 may comprise from 1-30,000 ppm by weight of the electrolyte composition, based on total weight of the electrolyte composition, such as from 5-25,000 ppm or from 10-20,000 ppm.

Non-limiting examples of accelerators 122 suitable for use in the present disclosure include:

| Accelerator |
|---|
| Sodium 3-mercapto-1-propanesulfonate |
| Sodium 3-(benzothiazol-2-ylthio)-1-propanesulfonate |
| FC4432[2] |
| [2] Fluorosurfactant of 3M (St. Paul, MN) |

With continued reference to FIG. 2, the battery 100 may comprise one or more current collectors 126. The anode 102 and/or the cathode 104 may comprise a current collector 126 to function as a support for the electrodes. The current collector 126 may function as an electrical conductor between the electrodes and any external circuits. The current collector 126 may be made from any suitable material, such as aluminum, copper, nickel, titanium, stainless steel, or any combination thereof. For example, the current collector 126 for the anode 102 may be made from copper. For example, the current collector 126 for the cathode 104 (not shown) may be made from aluminum. The current collector 126 may take any form, such as a foil, a mesh, a foam, and/or a carbon-coated type current collector 126.

With continued reference to FIG. 2, a solid electrolyte interphase (SEI) 124 may form on the anode 102. For example, the SEI 124 may form on the branches 110 plated onto the anode 102. The SEI 124 may form on a surface of the base 112 and the plurality of branches 110 and between the base 112 and plurality of branches 110 and the leveler 120, inhibitor 118, and/or accelerator 122. The SEI 124 may be formed during the first or subsequent battery cycle by reduction of the electrolyte. The SEI 124 may allow for ion material 108 transport while preventing further decomposition of the electrolyte.

Referring to FIGS. 1 and 2, the battery 100 may comprise a secondary (rechargeable) battery 100. The secondary battery 100 may be used by at least partially discharging the battery 100 (e.g., by use thereof), followed by at least partially charging the battery 100 (e.g., using the charger 109). The secondary battery 100 may perform more cycles before exhibiting a parasitic condition compared to the same secondary battery without the additive composition in the electrolyte composition as described herein.

A "cycle" as used herein refers to a charge event followed by a discharge event, with the exception that the first cycle only includes a fully charged battery being discharged. A "cycle to fail" refers to the number of cycles it takes for the battery to exhibit a parasitic condition. Parasitic condition is defined as the number of the cycle at which voltage fluctuates zigzaggedly during a charge event, typically accompanied by a Coulombic Efficiency dropping significantly below 100% (typically Coulombic Efficiency ≤95%). Zigzag charge voltage profile fluctuates along with non-differentiable apexes. Coulombic efficiency is defined in Equation 1 or Equation 2:

$$\text{Equation 1. Coulombic Efficiency (\%) = (Discharge Capacity/Charge Capacity)} * 100$$

or

Coulombic Efficiency (%) = (Specific Discharge Capacity/Specific Charge Capacity)*100                    Equation 2:

where specific discharge capacity and specific charge capacity are determined by the division of discharged/charged capacity of the battery by the grams of active material. Capacity may equal current (mA) * time (h) - the amount of energy that can be stored in the battery. Specific capacity may equal Capacity (mAh)/S active materials (g) .

For example, the secondary battery 100 may be exhibiting a non-parasitic cycling condition for as many cycles as the secondary battery 100 recharges before exhibiting the parasitic condition, and the secondary battery 100 may be exhibiting a parasitic condition at first charge which is cycle #2 for which the secondary battery 100 exhibits the parasitic condition.

In some non-limiting embodiments or aspects, the secondary battery 100 may be cycled by: providing the battery 100 in the form of a secondary battery 100 as described herein. The secondary battery 100 may be at least partially discharged, and subsequently may be at least partially charged. The secondary battery 100 may be discharged and charged in the cyclic manner described herein, which cycles may be repeated at least until the secondary battery 100 exhibits a parasitic condition during a charging step.

The secondary battery 100 may comprise a coin cell battery, such as a 2032 coin cell battery. Such a coin cell battery may be fabricated from bottom to top by: placing a stainless steel spacer (e.g., 500 $\mu$m thick and 18 mm in diameter) in a positive case, placing a cathode on the stainless steel spacer, adding electrolyte composition (e.g., 100 $\mu$l and/or 200 $\mu$l), placing a separator (e.g., 20 mm in diameter), adding additional electrolyte composition (e.g., 100 $\mu$l and/or 200 $\mu$l), placing one lithium metal disc (e.g., 250 $\mu$m thick and 16 mm in diameter), stacking two stainless steel spacers (e.g., 500 $\mu$m thick and 18 mm in diameter), and placing a negative case lid, followed by manual crimping (e.g., using a MTI MSK-110 hydraulic crimper) to a pressure of 1,000 psi, followed by releasing the crimping pressure. The order of making coin cells may be reversed from the foregoing description. Moreover, the number of spacers may be varied. A wave spring or Ni foam may optionally be included.

The present disclosure is also directed to a method for producing a rechargeable battery 100, the rechargeable battery 100 as described in this disclosure. Referring to FIGS. 1 and 2, the method may comprise arranging the electrolyte composition 106 in contact with both the anode 102 and the cathode 104 of the battery 100 to form a rechargeable battery 100.

The present disclosure is also directed to a method for extending the life of a rechargeable battery 100, the rechargeable battery 100 as described in this disclosure. The method for extending the life of a rechargeable battery includes: discharging a rechargeable battery 100 comprising the anode 102, the cathode 104, and the electrolyte composition 106 in contact with the anode 102 and the cathode 104. The method further includes re-charging the rechargeable battery 100. The rechargeable battery 100 may be cycled through discharging and recharging steps until failure (e.g., exhibiting a parasitic condition) thereof. The rechargeable battery 100 according to the present disclosure may have an extended life (e.g., successfully complete more cycles before failure) compared to the same rechargeable battery 100 without the additive composition as described herein. Therefore, rechargeable batteries described herein including the additive composition as described herein may extend the useable life of rechargeable batteries.

For example, the life of a rechargeable battery 100 may be extended by the electrolyte composition 106 reducing a topography variation resulting from material deposition (e.g., ion material 108) on the anode 102 of a battery 100 during the re-charging and/or reducing an effect of ion concentration gradient between a plurality of tips 116 of the plurality of branches 110 and the base 112 from material deposition on the anode 102 of the battery 100 during the re-charging.

In some non-limiting embodiments or aspects, the rechargeable battery 100 using the electrolyte composition 106 described herein may have an enhanced capacity compared to the same rechargeable battery 100 without the electrolyte additive composition as described herein. An enhanced capacity may refer to the rechargeable battery 100 having an increased discharge capacity (e.g., in mAh/g) after the same number of cycles compared to the same rechargeable battery 100 without the electrolyte additive composition as described herein.

The present disclosure is also directed to use of the electrolyte composition 106 as described herein to extend the life of a rechargeable battery 100.

The present disclosure is also directed to use of the electrolyte composition 106 as described herein as an electrolyte in a rechargeable battery 100.

## EXAMPLES

The following examples are presented to demonstrate the general principles of the disclosure. The disclosure should not be considered as limited to the specific examples presented.

Examples 1-3

Preparation of an Electrolyte Compositions

Electrolyte compositions were prepared according to the following Table:

| Component | Comparative Example 1 (Control) | Example 2 | Example 3 |
|---|---|---|---|
| LiFSI Salt | 36 wt% | 36 wt% | 36 wt% |
| DME Solvent | 11 wt% | 14 wt% | 14 wt% |
| Tetraglyme Solvent | 3 wt% | - | - |
| TTE Solvent | 49 wt% | 49 wt% | 49 wt% |
| Benzimidazole Leveler (ppm) | - | 140 ppm | - |
| 2-mercaptobenzimidazole Leveler (ppm) | - | - | 140 ppm |
| PLURONIC L-64 Inhibitor | - | 1,010 ppm | |
| PLURONIC 123 Inhibitor | - | - | 1,010 ppm |
| **Results** | | | |
| Parasitic Number[1] | 7 | 15 | 22 |
| Discharge Capacity @ 5th Cycle(mAh/g-S)[2] | 1406.6 | 1431.0 | 1425.3 |

[1] As described by the "cycle to fail" test described herein.
[2] Determined using a LANDT battery testing system using Data Processing Software V7.4, available from Landt Instruments (Vestal, NY).

The electrolyte compositions were included as the electrolyte composition of a coin cell battery arranged as previously described herein. This coin cell batteries having the electrolyte compositions were tested at room temperature as follows.

Three formation cycles were run at the following protocols: a potential window of 1-3V; 1/2 weight (based on S loading) current (C) (0.8 mA) discharge and charge (including a 3V Constant Voltage Charge (CVC) step with a cut off condition: when 5 min CVC or current below C/50 first occurs).

For the 4th and subsequent cycles, the following protocols were run: a potential window of 1-3V; 1/ weight (based on S loading) current (C) (1.675 mA) discharge and charge (including a 3V CVC step with a cut off condition: when 2 hour CVC or current below C/50 first occurs).

The foregoing Table shows the number to parasitic cycle and the discharge capacity of the coin cell batteries having the electrolyte composition.

As can be seen form the foregoing results, the batteries using the electrolyte composition according to the present disclosure have an improved number of cycles until a parasitic condition is exhibited and an improved discharge capacity compared to the control electrolyte composition.

Although the disclosed subject matter has been described in detail for the purpose of illustration based on what is currently considered to be the most practical and preferred embodiments or aspects, it is to be understood that such detail is solely for that purpose and that the disclosed subject matter is not limited to the disclosed embodiments or aspects, but, on the contrary, is intended to cover modifications and equivalent arrangements that are within the spirit and scope of the appended claims. For example, it is to be understood that the presently disclosed subject matter contemplates that, to the extent possible, one or more features of any embodiment or aspect can be combined with one or more features of any other embodiment or aspect.

**Claims**

1. An electrolyte composition for use with a battery comprising an anode and a cathode during a charging process, the anode comprising a base and a plurality of branches protruding from the base and spaced apart from one another along the base to form a gap, the electrolyte composition comprising:

   an electrolyte; and
   an additive composition comprising:

   an inhibitor that reduces a topography variation resulting from material deposition on the anode of the battery during the charging process; and/or
   a leveler that reduces an effect of ion concentration gradient between a plurality of tips of the plurality of branches and the base from material deposition on the anode of the battery during the charging process.

2. The electrolyte composition of claim 1, wherein the additive composition further comprises an accelerator that accelerates material deposition along the base of the anode of the battery during the charging process.

3. The electrolyte composition of claim 2, wherein in the additive composition:

   the inhibitor is adapted to selectively arrange proximate the plurality of tips of the plurality of branches;
   the leveler is adapted to selectively arrange in the gap along sidewalls of the plurality of branches; and/or
   the accelerator is adapted to selectively arrange in the gap proximate the base.

4. The electrolyte composition of claim 2 or claim 3, wherein the accelerator comprises an ionic material, and the leveler and the inhibitor comprise a non-ionic material.

5. The electrolyte composition of any preceding claim, wherein the inhibitor has a higher molecular weight than the leveler.

6. The electrolyte composition of any preceding claim, wherein the leveler comprises a polarizing agent comprising at least one hybrid atom comprising an atom from group IIIA, IVA, VA, VIA, VIIA, or any combination thereof optionally wherein the at least one hybrid atom comprises at least one of the following atoms: B, Al, Si, N, P, O, S, Se, F, Cl, Br, I, or any combination thereof and further optionally wherein the at least one hybrid atom comprises from 4-80 weight percent of the leveler.

7. The electrolyte composition of any preceding claim, and/or wherein the leveler comprises an aromatic functional group and/or wherein the leveler has a molecular weight of less than 500 g/mol.

8. The electrolyte composition of any preceding claim, wherein the inhibitor comprises a polarizing agent comprising at least one hybrid atom comprising an atom from group IIIA, IVA, VA, VIA, VIIA, or any combination thereof.

9. The electrolyte composition of claim 8, wherein the at least one hybrid atom comprises at least one of the following atoms: B, Al, Si, N, P, O, S, Se, F, Cl, Br, I, or any combination thereof.

10. The electrolyte composition of claim 9, wherein the inhibitor comprises at least one functional group comprising at least one of a hydroxyl group, an ether group, an ester group, a thiol group, a thiol ester group, a thiol ether group, an epoxy group, or any combination thereof and/or wherein the at least one hybrid atom comprises at least 3 weight percent of the inhibitor.

11. The electrolyte composition of any preceding claim, wherein the inhibitor comprises a polyglycol, a polyglycol ether, and/or a polyglycol ester.

12. The electrolyte composition of any preceding claim, wherein the inhibitor has a molecular weight of at least 200 g/mol.

13. The electrolyte composition of any of claims 2 to 17, wherein the accelerator comprises an anionic compound.

14. The electrolyte composition of any preceding claim, wherein the electrolyte comprises an inactive solvent.

15. A battery comprising:

an anode;
a cathode; and
an electrolyte composition in contact with the anode and the cathode, the electrolyte composition of any preceding claim.

FIG. 1

FIG. 2

Europäisches
Patentamt

European
Patent Office

Office européen
des brevets

# EUROPEAN SEARCH REPORT

**Application Number**

EP 24 21 5499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 206 878 A (GAO JINGANG) 30 December 2015 (2015-12-30)<br><br>* Example 1 * | 1,3, 5-11,14, 15 | INV.<br>H01M4/13<br>H01M10/0567 |
| X | CN 106 876 800 A (QINGDAO XIANGZHI ELECTRONIC TECH CO LTD) 20 June 2017 (2017-06-20)<br>* Example 1 * | 1,3, 5-11,14, 15 | |
| X | WO 2014/092493 A2 (SK INNOVATION CO LTD [KR]) 19 June 2014 (2014-06-19)<br>* par. 114, 115 * | 1-4,7-15 | |
| A | WANG ZHAO-YUN ET AL: "Electrochemical and in situ FTIR spectroscopic studies of gentian violet as a novel leveler in through-holes metallization for printed circuit board applications", ELECTROCHIMICA ACTA, ELSEVIER, AMSTERDAM, NL,<br>vol. 410, 3 February 2022 (2022-02-03), XP087003436,<br>ISSN: 0013-4686, DOI: 10.1016/J.ELECTACTA.2022.140018 [retrieved on 2022-02-03]<br>* Paragraph bridging pages 1-2. * | 1-15 | |

TECHNICAL FIELDS
SEARCHED (IPC)

H01M

The present search report has been drawn up for all claims

| Place of search | Date of completion of the search | Examiner |
|---|---|---|
| Munich | 12 June 2025 | Bettio, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

## ANNEX TO THE EUROPEAN SEARCH REPORT
## ON EUROPEAN PATENT APPLICATION NO.

EP 24 21 5499

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2025

| Patent document cited in search report | | Publication date | Patent family member(s) | Publication date |
|---|---|---|---|---|
| CN 105206878 | A | 30-12-2015 | NONE | |
| CN 106876800 | A | 20-06-2017 | NONE | |
| WO 2014092493 | A2 | 19-06-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11114696 B